# EUROPÄISCHE PATENTANMELDUNG

(11) **EP 1 238 841 A2**
(43) Veröffentlichungstag der Anmeldung: **11.09.2002**
(21) Anmeldenummer: 02004305.5
(22) Anmeldetag: 28.02.2002
(51) Int. Cl.: B60J 7/04

(54) **Deckel für ein Schiebedach**

(30) Priorität: 07.03.2001 DE 10110848
(71) Anmelder: ArvinMeritor GmbH, 63128 Dietzenbach (DE)
(72) Erfinder: Zinsmeister, Arnulf, 63776 Mömbris (DE); Röder, Joachim, 63165 Mühlheim (DE); Stehning, Kai, 61250 Usingen (DE)
(74) Vertreter: Sties, Jochen, Dipl.-Ing.

(57) **Zusammenfassung**

Bei einem Deckel für ein Schiebedach, der eine Deckelplatte (12) aus einem nichtmetallischen Material aufweist, beispielsweise aus Glas, sowie einen Rahmen (14), die an der Deckelplatte angebracht ist, und eine Antenne, soll die Antenne in kostengünstiger Weise anbringbar sein. Zu diesem Zweck ist vorgesehen, daß die Antenne (24; 30; 32) in dem Rahmen angeordnet ist.

## Beschreibung

Die Erfindung betrifft einen Deckel für ein Schiebedach, der eine Deckelplatte aus einem nichtmetallischen Material aufweist, beispielsweise aus Glas, sowie einen Rahmen, der an der Deckelplatte angebracht ist, und eine Antenne.

Der Deckel des Schiebedachs wird dazu verwendet, eine Dachöffnung im Dach vom Kraftfahrzeugen teilweise oder vollständig freizugeben. Die Deckelplatte kann aus Glas oder einem hochfesten Kunststoff bestehen, so daß auch bei geschlossenem Deckel ein Lichtdurchtritt möglich ist.

Aus der deutschen Offenlegungsschrift DE 196 37 794 A1 ist eine Deckelplatte bekannt, die aus einem Mehrscheibenglas besteht, wobei zwischen zwei Lagen des Mehrscheibenglases eine Antenne angeordnet ist. Die Anbringung der Antenne an einem Deckel, der nicht aus Metall besteht, ist vorteilhaft, da der Deckel die Antenne nicht abschirmt. Wenn dagegen die Antenne an anderer Stelle am Fahrzeugdach angebracht würde, wäre die Antenne von der metallischen Außenhaut des Daches derart abgeschirmt, daß die Sende-/Empfangsleistung der Antenne ungenügend ist. Nachteilig bei der bekannten Deckelkonstruktion ist aber der hohe Bauaufwand.

Die Aufgabe der Erfindung besteht somit darin, einen Deckel für ein Schiebedach der eingangs genannten Art dahingehend weiterzubilden, daß mit geringem Aufwand eine Antenne angeordnet werden kann.

Zu diesem Zweck ist erfindungsgemäß vorgesehen, daß die Antenne in dem Rahmen angeordnet ist. Der Rahmen bietet vielfältige Möglichkeiten, die Antenne auf kostengünstige Weise anzubringen, beispielsweise direkt in den Rahmen eingeschäumt. Ein weiterer Vorteil der erfindungsgemäßen Gestaltung besteht darin, daß es nicht notwendig ist, Mehrscheibengläser zu verwenden, um die Antenne anzubringen.

Gemäß einer bevorzugten Ausführungsform der Erfindung ist vorgesehen, daß die Antenne durch eine Verstärkungseinlage in dem Rahmen gebildet ist. Es werden also ohnehin vorhandene Elemente der Verstärkungseinlage für die Antenne verwendet, wobei mehrere Einzelstücke der Verstärkungseinlage geeignet zusammengeschaltet werden können.

Vorteilhafte Ausführungsformen der Erfindung ergeben sich aus den Unteransprüchen.

Die Erfindung wird nachfolgend anhand bevorzugter Ausführungsformen beschrieben, die in den beigefügten Zeichnungen dargestellt sind. In diesen zeigen:
- Figur 1 eine schematische Draufsicht auf einen erfindungsgemäßen Deckel;
- Figur 2 eine schematische Schnittansicht entlang der Ebene II-II von Figur 1;
- Figur 3 eine schematische Schnittansicht entlang der Ebene III-III von Figur 1, wobei zusätzlich einige Teile des Schiebedachs und des Fahrzeugdaches gezeigt sind; und
- Figur 4 in einer vergrößerten Schnittansicht einen Deckel gemäß einer zweiten Ausführungsform der Erfindung.

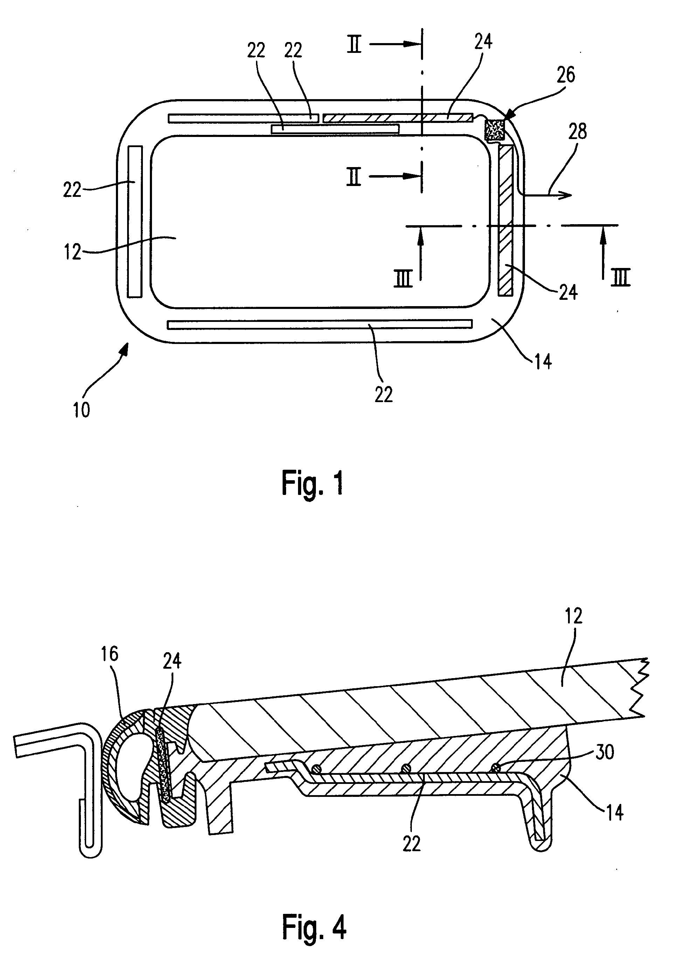

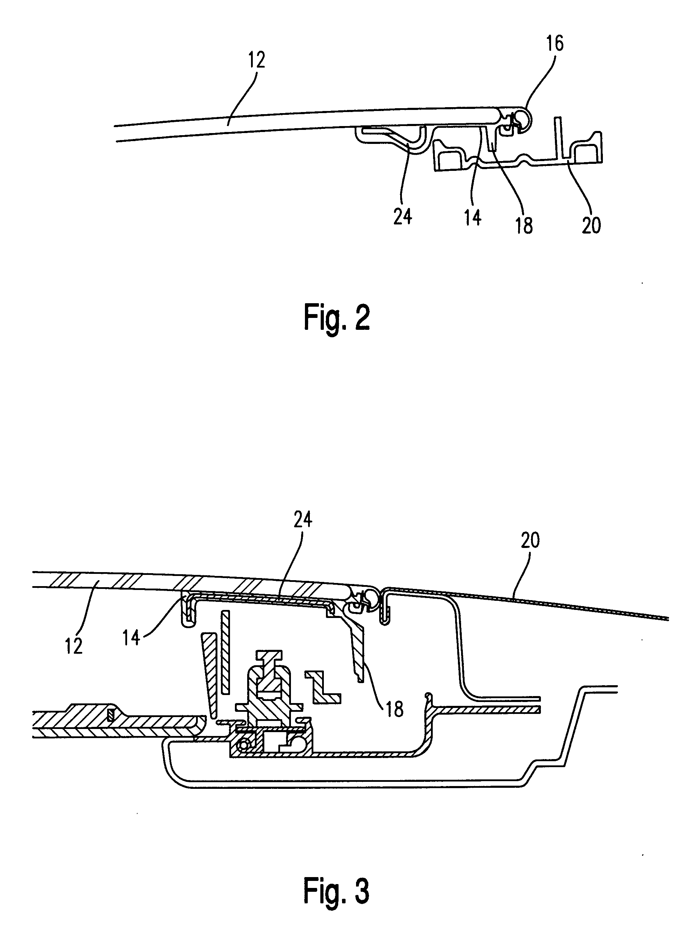

In Figur 1 ist ein Deckel 10 gezeigt, der eine Deckelplatte 12 und einen Rahmen 14 enthält. Die Deckelplatte 12 besteht aus Glas oder einem geeigneten, hochfesten Kunststoffmaterial. Der Rahmen 14 (siehe auch die Figuren 2 und 3) besteht üblicherweise aus einem gespritzten oder geschäumten Kunststoffmaterial und ist umlaufend an der Deckelplatte angeordnet. Er weist eine Randspaltabdichtung 16 sowie Funktionsgestaltungen 18 auf, die für das Verständnis der Erfindung nicht wichtig sind. Der Deckel ist in bekannter Weise verschiebbar an einem hier schematisch angedeuteten Fahrzeugdach 20 angebracht.

In dem Rahmen sind mehrere Verstärkungseinlagen 22, 24 angeordnet. Sie dienen dazu, dem Rahmen und der mit dieser verbundenen Deckelplatte die notwendige Stabilität zu verleihen. Von den Verstärkungseinlagen 22, 24 bestehen wenigstens die Verstärkungseinlagen 24 aus einem elektrisch leitenden Material, so daß sie als Antenne verwendet werden können. Zu diesem Zweck sind eine in den Rahmen eingegossene elektrische Schaltung 26 zum Anschließen der Antenne sowie ein Anschlußkabel 28 vorgesehen. Wie in Figur 1 zu sehen ist, sind zwei Verstärkungseinlagen 24, die im rechten Winkel zueinander angeordnet sind, zur Antenne zusammengeschaltet. Es wäre auch möglich, zwei in Längsrichtung hintereinander angeordnete Verstärkungseinlagen zu einer Antenne zusammenzuschalten. Auf diese Weise kann die Länge der Antenne auf die jeweiligen Sende-/Empfangsbedingungen abgestimmt werden.

In Figur 4 ist eine weitere Ausführungsform gezeigt, bei der die Antenne durch einen separat ausgeführten Antennendraht 30 gebildet ist, der an der Verstärkungseinlage 22 in den Rahmen 14 eingegossen ist. Zusätzlich ist eine als Antenne dienende Verstärkungseinlage 24 zu sehen, die hier als Gerüstband der Randspaltabdichtung 16 des Rahmens 14 ausgeführt ist.

Bei den gezeigten Ausführungsformen kann mit geringem Aufwand eine geschützt ausgeführte und angebrachte Antenne vorgesehen werden, die insbesondere für Systeme geeignet ist, bei denen die Leistungsausbeute nicht optimiert sein muß, beispielsweise Garagentoröffner, funkgesteuerte Zentralverriegelung oder ähnliches.

## Patentansprüche

1. Deckel für ein Schiebedach, der eine Deckelplatte (12) aus einem nichtmetallischen Material aufweist, beispielsweise aus Glas, sowie einen Rahmen (14), der an der Deckelplatte angebracht ist, und eine Antenne, **dadurch gekennzeichnet, daß** die Antenne (24; 30; 32) in dem Rahmen angeordnet ist.

2. Deckel nach Anspruch 1, **dadurch gekennzeichnet, daß** die Antenne durch eine Verstärkungseinlage (24) des Rahmens (14) gebildet ist.

3. Deckel nach Anspruch 2, **dadurch gekennzeichnet, daß** mehrere Verstärkungseinlagen (24) zusammengeschaltet sind, um die Antenne zu bilden.

4. Deckel nach einem der vorhergehenden Ansprüche, **dadurch gekennzeichnet, daß** die Antenne (30) an einer Verstärkungseinlage (22) angeordnet ist, die in den Rahmen (14) eingegossen ist.

5. Deckel nach einem der vorhergehenden Ansprüche, **dadurch gekennzeichnet, daß** der Rahmen (14) eine Randspaltabdichtung (16) aufweist.

6. Deckel nach Anspruch 5, **dadurch gekennzeichnet, daß** die Antenne durch ein Gerüstband (30) der Randspaltabdichtung gebildet ist.

7. Deckel nach einem der vorhergehenden Ansprüche, **dadurch gekennzeichnet, daß** in dem Rahmen (14) eine elektrische Schaltung (26) zum Anschließen der Antenne (24; 30; 32) angebracht ist.
